**Europäisches Patentamt**

**European Patent Office**

**Office européen des brevets**

(19)

(11) **EP 1 293 910 A2**

(12) **EUROPÄISCHE PATENTANMELDUNG**

(43) Veröffentlichungstag:
**19.03.2003 Patentblatt 2003/12**

(51) Int Cl.7: **G06F 17/28**, G06F 17/27

(21) Anmeldenummer: **02102370.0**

(22) Anmeldetag: **18.09.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **18.09.2001 DE 10145913**

(71) Anmelder:
• **Philips Corporate Intellectual Property GmbH 20099 Hamburg (DE)**
Benannte Vertragsstaaten:
**DE**

• **Koninklijke Philips Electronics N.V. 5621 BA Eindhoven (NL)**

(72) Erfinder: **Martin, Sven C., Dr. 52088, Aachen (DE)**

(74) Vertreter: **Volmer, Georg, Dipl.-Ing. et al Philips Corporate Intellectual Property GmbH, Postfach 50 04 42 52088 Aachen (DE)**

(54) **Verfahren zur Bestimmung von zu Nichtterminalen einer Grammatik gehörigen Sequenzen von Terminalen oder von Terminalen und Platzhaltern**

(57) Die Erfindung bezieht sich auf ein Verfahren zur Bestimmung von zu Nichtterminalen einer Grammatik gehörigen Sequenzen von Terminalen oder von Terminalen und Platzhaltern auf einem Trainingskorpus von Sätzen, von denen jeweils bekannt ist, welche Nichtterminale der Grammatik sie enthalten, mit den Schritten:

- Bestimmung von Sequenzen von Terminalen oder von Terminalen und Platzhaltern und
- jeweilige Zuordnung der Sequenzen von Terminalen oder von Terminalen und Platzhaltern zu einem oder keinem Nichtterminal mittels eines Klassifikationsverfahrens

Ein solches Verfahren lässt sich z. B. zum automatischen Erlernen der zu einer semantischen Grammatik gehörenden Wortfolgen in einem automatischen Dialogsystem benutzen.

**EP 1 293 910 A2**

**Beschreibung**

Die Erfindung bezieht sich auf ein Verfahren zur Bestimmung von zu Nichtterminalen einer Grammatik gehörigen Sequenzen von Terminalen oder von Terminalen und Platzhaltern. Eine solche automatische Bestimmung von zu Nichtterminalen gehörigen Terminalsequenzen, die ggf. von Platzhaltern unterbrochen sein können, besitzt z. B. Bedeutung im Bereich der automatischen Dialogsysteme. Daneben spielen Grammatiken jedoch auch eine Rolle im Verständnis der Sprache allgemein und der Kommunikationsstruktur zwischen Menschen.

Automatische Dialogsysteme werden u. a. zur Erteilung von Auskünften oder auch zur Erledigung von Bankgeschäften über Telefon oder an öffentlichen Benutzerterminals verwendet. Bekannte Systeme sind z. B. das Fahrplanauskunftssystem der Schweizer Bahnen und das Flugauskunftssystem der Deutschen Lufthansa. Aber auch die IVR-Systeme (Interactive Voice Response) verschiedener Anbieter wie z. B. von Periphonics gehören dazu. Allen diesen Systemen ist gemeinsam, dass ein Benutzer in einen gesprochenen Dialog mit einer Maschine tritt, um die von ihm gewünschten Auskünfte zu erhalten bzw. die von ihm gewünschten Transaktionen durchzuführen. Neben der sprachlichen Interaktion werden in neueren Systemen auch noch weitere Medien wie z. B. visuelle Bildschirmausgaben oder das Versenden eines Telefaxes angeboten.

Um eine Benutzeranfrage bearbeiten zu können, muss ein automatisches Dialogsystem die bedeutungstragenden Bestandteile der Anfrage extrahieren und in eine maschinenverarbeitbare Form bringen. Z. B. müssen bei einer Fahrplanauskunft bei der Anfrage "Ich möchte von Berlin nach München fahren." die Teile "von Berlin" und "nach München" extrahiert und insoweit vom automatischen System "verstanden" werden, dass es sich bei "Berlin" um den Startort der Reise und bei "München" um den Zielort handelt. Dazu kann das System diese Angaben z. B. in die entsprechenden Felder eines elektronischen Formulars eintragen: "Startort: Berlin" und "Zielort: München".

Zur Extraktion der bedeutungstragenden Bestandteile einer Anfrage werden z. Z. vorwiegend manuell erstellte semantische Grammatiken verwendet. Für das obige Beispiel des Startortes der Reise ließen sich z. B. folgende Produktionsregeln verwenden:

       <Startort>      "von" <Ort>,
       <Ort>        "Berlin".

Die spitzen Klammern <...> bezeichnen dabei die Nichtterminale der Grammatik, deren Terminale hier in Anführungszeichen "..." wiedergegeben sind. Alternativ zu diesen Regeln kann auch eine in dem Sinne flache Grammatik verwendet werden, dass deren Regeln ihre Nichtterminale unmittelbar in Terminalsequenzen umsetzen. Im obigen Beispiel:

       <Startort>      "von Berlin".

Obwohl in der Praxis recht selten verwendet, können dabei die Terminalsequenzen auch von Platzhaltern unterbrochen werden. So wird im obigen Beispiel "Ich möchte von Berlin nach München fahren." die Verbgruppe "möchte ... fahren" als Klammer um die Angabe des Startortes und Zielortes verwendet. Eine mögliche Produktionsregel für die spezielle Verbgruppe <Fahrwunsch> könnte daher folgendermaßen aussehen:

       < Fahrwunsch >      "möchte [...] fahren",

wobei der Platzhalter [... ] für eine beliebige zwischengeschobene Terminalsequenz steht.

Aufgrund der Komplexität menschlicher Sprache ist bisher keine Grammatik bekannt, die alle sprachlichen Phänomene abdeckt. In der Praxis werden daher für jeden Anwendungsfall spezielle, anwendungsbezogene Grammatiken entwickelt, welche die für die Anwendung wichtigen Sprachkonstruktionen beschreiben können. Für das obige Beispiel der Fahrplanauskunft sind das u. a. die bereits erwähnten, auch Konzepte genannten, Nichtterminale Start- und Zielort sowie z. B. auch die verschiedenen Konstruktionen, um eine Uhrzeit oder ein Datum auszudrücken. Dabei werden solche Grammatiken bisher i. d. R. manuell entwickelt, was einen erheblichen Kostenfaktor in der Erstellung und Pflege einer Anwendung bedeutet.

Um diesen manuellen Aufwand zu verringern, werden daher seit einigen Jahren Methoden zum automatischen Erlernen von Grammatiken untersucht. Viele dieser Methoden gehen dabei von einem Trainingskorpus von Beispielsätzen für die zu entwickelnde Anwendung aus, die beispielsweise durch Mitprotokollieren der Dialoge einer bereits bestehenden, sich ggf. menschlicher Operateure bedienenden Anwendung gewonnen werden. Weiter bedürfen einige der Methoden auch noch einer manuellen Annotierung dieser Sätze, d. h ein Mensch vermerkt zu jedem Satz, welche Nichtterminale er enthält, ggf. auch noch, in welcher Reihenfolge diese auftreten und welche Terminale des Satzes zu welchem Nichtterminal gehören. Zwar erfordert auch eine solche Annotierung eine gewisse manuelle Arbeit, diese ist jedoch i. d R. weniger anspruchsvoll und aufwendig als das manuelle Erstellen einer Grammatik.

Für den Trainingssatz "Ich möchte von Berlin nach München fahren." könnte z. B. annotiert werden, dass es sich um die Folge der Nichtterminale "<Fahrwunsch> <Startort> <Zielort>" handelt, und dass die Sequenzen "möchte [...] fahren" zu <Fahrwunsch>, "von Berlin" zu <Startort> und "nach München" zu <Zielort> gehören. (Um die Position des zu einer Sequenz von Terminalen und Platzhaltern gehörigen Nichtterminals festzulegen, wurde hier auf die Position des ersten Terminals der Sequenz im Satz abgestellt.) Alternativ könnte eine Annotierung aber auch nur vermerken, dass der Trainingssatz die Nichtterminale "<Startort>", "<Zielort>" und "<Fahrwunsch>" enthält, ohne ihre Reihenfolge und/oder ihre zugehörigen Sequenzen von Terminalen oder von Terminalen und Platzhaltern anzugeben.

So befasst sich der auf der Eurospeech 2001 (7th European Conference on Speech Communication and Technology, Aalborg, Denmark, September 2001) erscheinende (und bereits unter der URL http://www-i6.informatik. rwth-aachen.de/~och/eurospeech2001.ps im Internet vorveröffentlichte) Beitrag "K. Macherey, F. J. Och, H. Ney: Natural Language Understanding Using Statistical Machine Translation" mit dem Problem des automatischen Erlernens einer Grammatik. Allerdings konzentriert sich der Beitrag nicht auf das explizite Lernen einer Grammatik, sondern fasst die Fragestellung, welche Nichtterminale zu einem aus Terminalen gebildeten Satz gehören, als Übersetzungsproblem auf. Ausgehend von einem Trainingskorpus von Beispielsätzen, die mit der Reihenfolge der zu ihnen gehörigen Nichtterminale annotiert sind, werden Übersetzungsstrukturen erlernt, die einen aus Terminalen gebildeten Satz in eine zugehörige Sequenz von Nichtterminalen übersetzen. Dazu werden aus der statistischen maschinellen Übersetzung bekannte Methoden eingesetzt.

Eine Besonderheit des erwähnten Beitrages ist die Verwendung von "Ausrichtungsschablonen" (alignment templates). Dies sind zueinander gehörige Sequenzen oder "Phrasen" (phrases) von Worten der Quellsprache bzw. von Worten der Zielsprache der Übersetzung in der vorliegenden Anwendung also von Terminal- und Nichtterminalsequenzen, nebst der Angabe, welche Wortpositionen der Quell- und Zielsequenzen zueinander gehören (are linked). Als Beispiel für eine solche Ausrichtungsschablone gibt der Beitrag u. a. die Schablone:

Quellsequenz: "von $CITY nach $CITY",
Zielsequenz: "@origin @destination",
Wortpositionszugehörigkeiten: "von $CITY" ↔ @origin,
"nach $CITY" ↔ @destination.

"$CITY" ist eine beliebige Stadt (einer Städteliste) und die Nichtterminale @origin und @destination entsprechen den oben erwähnten <Startort> und <Zielort>.

Diese Ausrichtungsschablonen, die beim Training der statistischen Übersetzungsstrukturen automatisch bestimmt werden, besitzen jedoch einen engen Zusammenhang zu flachen Grammatiken. So kann die obige Schablone z. B. dahingehend verstanden werden, dass die Terminalsequenz "von Berlin", die nach Kategorisierung zu "von $CITY" wird (Berlin gehört zur Kategorie (category) $CITY), eine mögliche Auflösung des Nichtterminals @origin ist.

Neben den Ausrichtungsschablonen müssen in dem von Macherey et al. geschilderten Verfahren noch eine Vielzahl von weiteren Parametern geschätzt werden. Dazu gehören u. a. die Phrasenausrichtungswahrscheinlichkeiten (phrase alignment probabilities), die Wahrscheinlichkeiten der Benutzung der Ausrichtungsschablonen (probabilities of applying alignment templates) und die Wortübersetzungswhrscheinlichkeiten ($p(f_j \,|\, e_i)$). Zur verlässlichen Schätzung einer solch großen Zahl von Parametern wird ein entsprechend umfangreicher Trainingskorpus benötigt. Auch müssen die Trainingssätze, wie bereits gesagt, mit der Reihenfolge der jeweils zugehörigen Nichtterminalsequenz annotiert sein. Daher erfordert auch dieses Verfahren einen entsprechend hohen Aufwand.

Aufgabe der Erfindung ist es daher, ein Verfahren und ein System zur Ausführung dieses Verfahrens anzugeben, das es gestattet, auf einem im Vergleich zum Stand der Technik kleinen Trainingskorpus von Sätzen, von denen jeweils bekannt ist, welche Nichtterminale einer Grammatik sie enthalten, zu Nichtterminalen der Grammatik gehörige Sequenzen von Terminalen oder von Terminalen und Platzhaltern zu bestimmen.

Diese Aufgabe wird gelöst einerseits durch

ein Verfahren zur Bestimmung von zu Nichtterminalen einer Grammatik gehörigen Sequenzen von Terminalen oder von Terminalen und Platzhaltern auf einem Trainingskorpus von Sätzen, von denen jeweils bekannt ist, welche Nichtterminale der Grammatik sie enthalten, mit den Schritten:

- Bestimmung von Sequenzen von Terminalen oder von Terminalen und Platzhaltern und
- jeweilige Zuordnung der Sequenzen von Terminalen oder von Terminalen und Platzhaltern zu einem oder keinem Nichtterminal mittels eines Klassifikationsverfahrens,

und andererseits durch

ein System zur Bestimmung von zu Nichtterminalen einer Grammatik gehörigen Sequenzen von Terminalen oder von Terminalen und Platzhaltern auf einem Trainingskorpus von Sätzen, von denen jeweils bekannt ist, welche Nichtterminale der Grammatik sie enthalten, das

- zur Bestimmung von Sequenzen von Terminalen oder von Terminalen und Platzhaltern und
- zur jeweiligen Zuordnung der Sequenzen von Terminalen oder von Terminalen und Platzhaltern zu einem oder keinem Nichtterminal mittels eines Klassifikationsverfahrens

vorgesehen ist.

Die Erfindung konzentriert sich also auf die unmittelbare Schätzung der zu den Nichtterminalen der Grammatik gehörenden Sequenzen von Terminalen oder von Terminalen und Platzhaltern, ohne weitere durch eine Schätzung zu bestimmende Parameter einzuführen. Dadurch genügt bereits ein im Vergleich zum Stand der Technik kleiner Trainingskorpus für eine zuverlässige Schätzung der zu den Nichtterminalen gehörigen Sequenzen Da die Sequenzen im Verfahren automatisch bestimmt werden, benötigt der Trainingskorpus keinerlei Annotierung über die Zugehörigkeit der im Training beobachteten Sequenzen zu den Nichtterminalen.

Die abhängigen Ansprüche 2 bis 8 beanspruchen besonders vorteilhafte Ausführungsformen der Erfindung. So beschränkt Anspruch 2 das erfindungsgemäße Verfahren auf die Bestimmung von Sequenzen, die nur aus Terminalen bestehen, was für viele praktische Anwendungen ausreichend ist und in diesen unnötig komplexe Grammatiken vermeidet. In Anspruch 3 wird angegeben, für die Bestimmung der Sequenzen von Terminalen oder von Terminalen und Platzhaltern die Häufigkeit dieser Sequenzen im Trainingskorpus zu berücksichtigen. Damit lässt sich vorteilhaft berücksichtigen, dass häufig im Zusammenhang miteinander auftretende Terminale mit hoher Wahrscheinlichkeit zu demselben Nichtterminal gehören.

Anspruch 4 nennt eine nützliche, alle Fehlklassifikationen berücksichtigende Zielfunktion, die bei der Klassifikation der Sequenzen von Terminalen oder von Terminalen und Platzhaltern iterativ optimiert wird. U. a. besitzt diese Zielfunktion den Vorteil, dass die Reihenfolge der Nichtterminale in den Trainingssätzen nicht manuell annotiert werden muss, da sie lediglich die Information verwendet, welche Sequenzen von Terminalen oder von Terminalen und Platzhaltern und welche Nichtterminale in den Trainingssätzen vorhanden sind. Neben dieser Zielfunktion sind jedoch auch Alternativen denkbar. So lässt sich z. B. statt des Quadrates (quadrierte L2-Norm) auch ein absoluter Abstand (L1-Norm) verwenden. Weiter kann bei entsprechend annotiertem Trainingskorpus auch die Reihenfolge der Nichtterminale als eigener Beitrag in der Zielfunktion berücksichtigt werden.

In den Ansprüchen 5 und 6 wird das Austauschverfahren zur Klassifikation der Sequenzen verwendet. Das Austauschverfahren gewährleistet eine effiziente (lokale) Optimierung der Zielfunktion, da nur wenige Operationen zur Berechnung der Veränderung der Zielfunktion bei Durchführung eines Austauschs nötig sind. Die Listung der Sequenzen entsprechend ihrer Häufigkeit im Trainingskorpus berücksichtigt in vorteilhafter Weise, dass häufige Sequenzen üblicherweise einen größeren Einfluss auf die Optimierung der Zielfunktion haben.

Daneben sind jedoch auch noch weitere Listungsreihenfolgen denkbar. Z. B. kann als erstes der Austausch mit dem größten Gewinn in der Zielfunktion vorgenommen werden. Um Rechenoperationen einzusparen, kann es jedoch günstig sein, den Austauschkandidaten mit dem größten Gewinn nicht nach jedem Austausch neu zu berechnen, sondern dies nur nach einer gewissen Wartezeit zu tun, z. B. nach jedem 100ten Austausch, einmal pro Iteration oder jeweils nach 10 Iterationen. Zwischen den Neuberechnungen würde man dann z. B. den Austausch der Kandidaten in der Reihenfolge der Größe ihrer zuletzt berechneten Gewinne in der Zielfunktion vornehmen.

Statt des Austausches der gerade bestehenden Zuordnung jeweils einer Sequenz zu einem oder keinem Nichtterminal mit einer anderen lassen sich allerdings auch andere Klassifikationsverfahren einsetzen. So ließe sich z. B. feststellen, welche Klasse, d. h welches Nichtterminal, den höchsten Beitrag zur Zielfunktion verursacht, und beispielsweise, welche Sequenzen dieses Nichtterminals daran den höchsten Anteil haben. Diese Sequenzen könnten dann zu geeigneteren Nichtterminalen, d. h. solchen, in denen sie einen günstigeren Beitrag zur Zielfunktion leisten, zugewiesen werden.

Die Bestimmung der Sequenzen von Terminalen oder von Terminalen und Platzhaltern und ihre Zuordnung zu einem oder keinem Nichtterminal kann getrennt voneinander in zwei aufeinander folgenden Schritten erfolgen oder aber auch miteinander verbunden werden. Die Ansprüche 7 und 8 nennen zwei vorteilhafte Möglichkeiten einer solchen Verbindung der Schritte miteinander. Stellt man so nach einer Durchführung des erfindungsgemäßen Verfahrens fest, dass neben einer ersten Sequenz auch zwei weitere Sequenzen bestimmt wurden, die zusammengefügt die erste Sequenz ergeben, mit anderen Worten, besteht die erste Sequenz aus zwei Teilsequenzen, so ist die Zuordnung dieser drei Sequenzen von Interesse. Ist dann eine Teilsequenz genauso zugeordnet wie die erste Sequenz, während die andere Teilsequenz anders zugeordnet ist, so kann es sinnvoll sein, die erste Sequenz aus der Menge der durch das Verfahren bestimmten Sequenzen zu entfernen.

Eine solche Situation kann nämlich darauf hindeuten, dass die erste Sequenz keine eigenständige Bedeutung besitzt, sondern immer als Zusammenfügung der beiden Teilsequenzen aufzufassen ist. Die Verwendung der ersten Sequenz würde in diesem Fall immer dazu führen, dass das zu der anders zugeordneten Teilsequenz gehörende Nichtterminal übersehen würde. Eine Entfernung der ersten Sequenz würde damit zu einer Verbesserung der Zielfunktion führen. Ein Beispiel dafür ist die erste Sequenz "von Berlin nach München", die tatsächlich immer in die beiden Teilsequenzen "von Berlin" und "nach München" mit den diesen zugeordneten Nichtterminalen <Startort> und <Zielort> zerfällt.

Nach Entfernen solcher ersten Sequenzen ist es vorteilhaft, die Zuordnung der Sequenzen zu den Nichtterminalen zu wiederholen, da diese ersten Sequenzen beim vorherigen Zuordnungsschritt ja das Erkennen der Teilsequenzen in den betroffenen Sätzen verhindert haben. Natürlich kann im Verfahren vorgesehen werden, nach diesen Schritten des Entfernens und der Neuzuordnung zu überprüfen, ob die Zielfunktion sich wirklich verbessert hat, und im gegenteiligen Fall die Schritte rückgängig zu machen. Entsprechend lassen sich verschiedene Varianten des Verfahrens vorsehen, die sich darin unterscheiden, wie viele erste Sequenzen gleichzeitig entfernt werden und wie oft dieses Vorgehen wiederholt wird.

Während also die in den Ansprüchen 7 und 8 genannten Methoden die Bestimmung der Sequenzen von Terminalen oder von Terminalen und Platzhaltern und deren Zuordnung zu Nichtterminalen einer Grammatik dadurch verbinden, dass diese Schritte iterativ in Wechselwirkung miteinander erfolgen, sind auch noch weitere Möglichkeiten der Verbindung dieser Schritte möglich. So können sie z. B. auch noch inniger miteinander verbunden werden, indem beispielsweise bei der Bestimmung der Sequenzen bereits berücksichtigt wird, welche Nichtterminale in den jeweiligen Sätzen vorliegen. So kann man z. B. Terminale, die in verschiedenen Sätzen auftreten, nur dann zu einer Sequenz zusammenfassen, wenn diese Sätze mindestens ein identisches Nichtterminal enthalten. Weiter kann man dann bei der Zuordnung der Sequenz zu einem Nichtterminal die möglichen Kandidaten für das Nichtterminal auf diese in allen Trainingssätzen mit der Sequenz auftauchenden Nichtterminale beschränken.

Anspruch 10 beansprucht erfindungsgemäß bestimmte zu Nichtterminalen einer Grammakik gehörige Sequenzen von Terminalen oder von Terminalen und Platzhaltern. Solche Sequenzen lassen sich z. B. in bekannten Syntaxanalyseverfahren einsetzen, um die in einem Satz der Grammatik enthaltenen Nichtterminale zu bestimmen. insbesondere können sie also innerhalb eines automatischen Dialogsystems mit zur Bedeutungsbestimmung der an dieses gerichteten Anfragen benutzt werden.

Diese und weitere Aspekte und Vorteile der Erfindung werden im Folgenden an Hand der Ausführungsbeispiele und insbesondere an Hand der beigefügten Zeichnungen näher erläutert. Es zeigen:

Fig. 1    den Ablauf eines Algorithmus zur Bestimmung von Sequenzen von Terminalen oder von Terminalen und Platzhaltern in Form eines Flussdiagramms, und

Fig. 2    den Ablauf des Austauschalgorithmus zur Klassifikation von Sequenzen von Terminalen oder von Terminalen und Platzhaltern in Form eines Flussdiagramms.

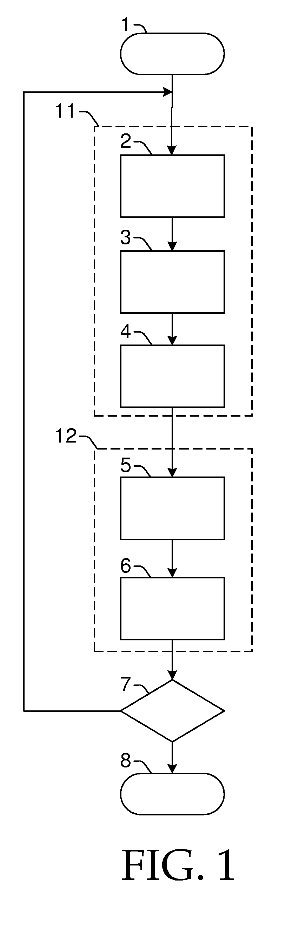

Die Fig. 1 zeigt den Ablauf eines Algorithmus zur Bestimmung von Sequenzen von Terminalen oder von Terminalen und Platzhaltern in Form eines Flussdiagramms. Dieser Algorithmus ist dem Beitrag "D. Klakow: Language-Model Optimization by Mapping of Corpora', Proc. ICASSP, vol. II, pp. 701-704, Seattle, WA, May 1998" entnommen, der hiermit in die Anmeldung einbezogen wird. Die Grundidee des Algorithmus besteht darin, Terminale, die im Trainingskorpus häufig in gemeinsamen Sätzen auftreten, zu einer Sequenz zusammenzufassen. Die zusammenzufassenden Terminale können dabei in den Sätzen unmittelbar benachbart sein (im obigen Beitrag "standard phrases"), einen bestimmten Abstand zueinander aufweisen (z. B. immer durch genau ein Terminal voneinander getrennt sein: "D1-phrases") oder auch nur einfach der Bedingung genügen, gemeinsam in einem Satz aufzutreten.

Der Algorithmus stellt eine iterative Abfolge der Prozessblockgruppen 11 und 12 dar, wobei Blockgruppe 11 zur Bildung neuer Sequenzen von Terminalen oder von Terminalen und Platzhaltern und Blockgruppe 12 zur Auflösung bestehender Sequenzen dient. Diese Blockgruppen werden hintereinander iterativ so lange abgearbeitet, bis sich keine Änderung mehr an den gefundenen Sequenzen ergibt.

Nach der Initialisierung im Startblock 1 tritt der Algorithmus also in die Folge 11 der Prozessblöcke 2, 3 und 4 ein, welche die Bildung neuer Sequenzen prüft. Dazu wird im Block 2 zunächst eine Liste der am häufigsten im Trainingskorpus beobachteten Paare erstellt. Dabei werden für die Paarbildung sowohl Terminale als auch die bereits in den vorigen Iterationsstufen gebildeten Sequenzen von Terminalen oder von Terminalen und Platzhaltern, die insofern die in ihnen enthaltenen Terminale ersetzen, herangezogen. Die Liste der Paare wird nach der Auftrittshäufigkeit der Paare sortiert. Die Länge der Liste und damit der Rechenund Speicheraufwand können z. B. dadurch begrenzt werden, dass in die Liste nur Paare mit einer gewissen ersten Mindesthäufigkeit aufgenommen werden.

Im Block 3 wird die Liste schließlich durch Herausstreichen der weniger häufigen, um dieselben Bestandteile konkurrierenden Paare eindeutig gemacht. Solche Mehrdeutigkeiten entstehen, wenn ein Bestandteil eines Paars auch einem anderen Paar zugeordnet werden kann. So konkurriert in dem Satz "Ich möchte von Berlin nach München fahren." (nach der auch im oben erwähnten Konferenzbeitrag von Macherey et al. benutzten Kategorisierung von "Berlin" und "München" zu "$CITY") z. B. die Paarbildung "von $CITY" mit "$CITY nach". Diese Mehrdeutigkeiten werden im Block 3 dadurch beseitigt, dass der häufigeren Paarung der Vorrang gegeben wird.

Dazu wird die Liste in der Reihenfolge absteigender Häufigkeit durchgegangen und, um die jeweilige Paarung "ab" eindeutig zu machen, werden alle weniger häufigen Paarungen "a *$\neq$b" und "*$\neq$ab" aus der Liste entfernt, wobei die Symbole "*≠a" für einen beliebigen Paarbestandteil verschieden von "a" und "*≠b" für einen beliebigen Paarbestandteil verschieden von "b" stehen. So wäre im obigen Beispiel also vermutlich "von $CITY" häufiger als "$CITY nach", da es voraussichtlich auch noch Sätze wie z. B. "Ich möchte von Berlin fahren." (also ohne die Zielortangabe) geben wird Daher würde "$CITY nach" auf der Liste gestrichen werden und einzig "von $CITY" in der Liste verbleiben.

Im Block 4 werden sodann die in der Liste verbliebenen Paare zu Sequenzen von Terminalen oder von Terminalen und Platzhaltern zusammengefasst und die Sätze des Trainingskorpus werden entsprechend umgeschrieben. So kann man beispielsweise den Satz "Ich möchte um neun Uhr fahren." betrachten und annehmen, dass "neun" zu "$NUMBER" kategorisiert wird, und die für diesen Satz maßgebenden Paare in der Liste "möchte [...] fahren" und "$NUMBER Uhr" sind. Dann würde dieser Satz im Block 4 umgeschrieben zu "Ich {möchte [...] fahren} um {$NUMBER Uhr}.", wobei die geschweiften Klammern "{}" die Sequenzen bezeichnen. In derselben Weise würde aus dem Satz "Ich möchte gegen zehn Uhr fahren." der umgeschriebene Satz "Ich {möchte [...] fahren} gegen {$NUMBER Uhr}.".

Durch die Bildung neuer Sequenzen und das damit verbundene Umschreiben des Trainingskorpus kann es vorkommen, dass vormals häufige Sequenzen unter eine gewisse zweite Mindesthäufigkeit sinken. So kann im obigen Beispiel in einer weiteren Iterationsstufe z. B. das Paar "um {$NUMBER Uhr}" zu der neuen Sequenz "{um {$NUMBER Uhr}}" zusammengefasst werden, wodurch die Häufigkeit der früheren Sequenz "{$NUMBER Uhr}", die jetzt (direkt) vielleicht nur noch in der Verbindung "gegen {$NUMBER Uhr}" sichtbar ist, unter die zweite Mindesthäufigkeit sinkt. Der im Konferenzbeitrag von Klakow veröffentlichte Algorithmus sieht deshalb zwischen je zwei Sequenzbildungsblöcken 11 auch einen Sequenzauflösungsblock 12 vor, der aus den Teilblöcken 5 und 6 besteht.

Nach Block 4 wird daher im Block 5 eine Liste der Sequenzen von Terminalen oder von Terminalen und Platzhaltern gebildet, deren Häufigkeit geringer als eine zweite Mindesthäufigkeit ist. Im Block 6 werden diese Sequenzen dann wieder aufgespalten, indem die letzte Paarbildung, die zu der Sequenz geführt hat, wieder rückgängig gemacht wird. Die Sequenz "{um {$NUMBER Uhr}}" beispielsweise würde also wieder in ihre Bestandteile "um" und "{$NUMBER Uhr}" zerlegt.

Dieser Sequenzauflösungsblock 12 verfolgt also den Grundgedanken, dass Sequenzen nur dann von Bestand sein sollten, wenn sie ein gewisses zweites Mindesthäufigkeitskriterium erfüllen. Der Algorithmus kann jedoch grundsätzlich auch ohne diesen Aufspaltungsschritt betrieben werden, wozu man z. B. diese zweite Mindesthäufigkeit auf 0 setzen kann. Insbesondere kann man durch die Wahl der Kriterien der ersten und zweiten Mindesthäufigkeit die Anzahl der gefundenen Sequenzen steuern.

Nach dem Block 6 wird im Entscheidungsblock 7 geprüft, ob die Abarbeitung der Blockgruppen 11 und 12 zu einer Veränderung in den gefundenen Sequenzen geführt hat. Ist dies der Fall, tritt der Algorithmus in seine nächste Iterationsstufe und tritt wieder in Block 2 ein. Anderenfalls wird der Algorithmus im Endblock 8 unter Sicherung der gefundenen Sequenzen beendet.

Der damit beschriebene Algorithmus der Bestimmung von Sequenzen von Terminalen oder von Terminalen und Platzhaltern ist nur eine Möglichkeit, solche Sequenzen entsprechend ihrer relativen Häufigkeit im Trainingskorpus zu bestimmen. Alternativen ergeben sich z. B. auch aus anderen, dem Fachmann bekannten Techniken aus der N-Gramm- und insbesondere der Varigramm-Sprachmodellierung. Auch lassen sich an Stelle des Kriteriums der Häufigkeit einer Sequenz im Trainingskorpus auch andere Kriterien wie z. B. im Beitrag von Klakow die Transinformation ("mutual information") der Paarbestandteile verwenden.

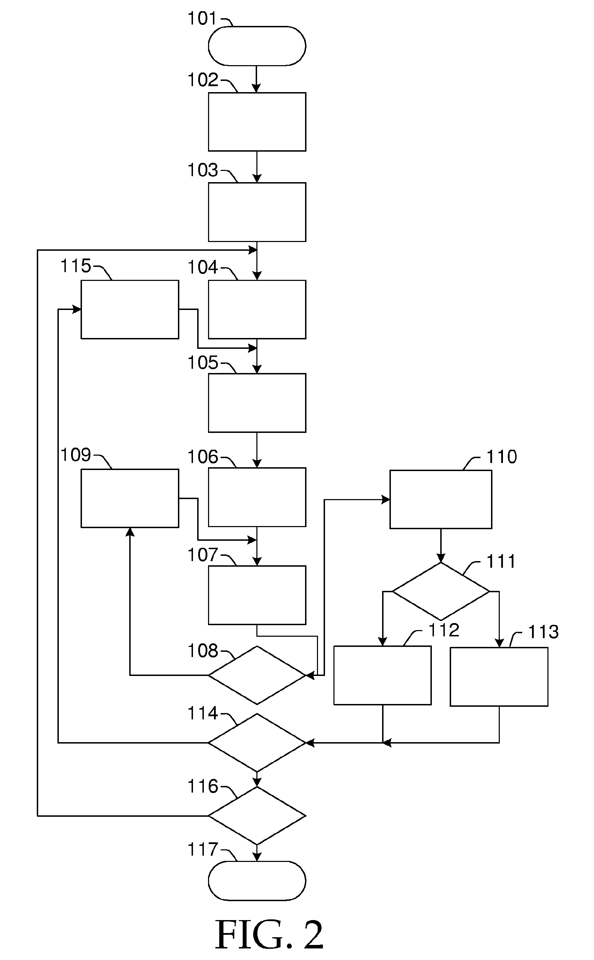

Fig. 2 zeigt den Ablauf des Austauschalgorithmus zur Klassifikation von Sequenzen von Terminalen oder von Terminalen und Platzhaltern in Form eines Flussdiagramms. In seiner allgemeinen, abstrakten Form ist der Austauschalgorithmus z. B. aus "R.O. Duda, P.E. Hart, D. G. Stork: Pattern Classification. 2^nd Ed. J. Wiley & Sons, NY, 2001, Abschnitt 10.8: Iterative Optimization", was hiermit in diese Anmeldung mit einbezogen wird, wohlbekannt. Seine Anwendung auf das Problem, nach der Bestimmung von Sequenzen von Terminalen oder von Terminalen und Platzhaltern diese Sequenzen den Nichtterminalen der Grammatik zuzuordnen, oder festzulegen, dass eine Sequenz zu keinem der Nichtterminale gehört, erfordert jedoch eine Konkretisierung und entsprechende Übertragung seiner Komponenten.

Die Grundidee des Austauschalgorithmus besteht darin, für jede bestehende Zuordnung einer Sequenz zu einem oder keinem Nichtterminal zu prüfen, ob sich durch Veränderung dieser Zuordnung eine bessere Übereinstimmung mit der auf dem Trainingskorpus vorliegenden Verteilung der Nichtterminale erreichen lässt. Der Algorithmus stoppt, wenn keine solche einzelne Zuordnungsveränderung mehr einen Gewinn bringt.

Zur Durchführung des Algorithmus werden nach dem Startblock 101 zunächst im Prozessblock 102 alle Sequenzen keinem Nichtterminal zugeordnet. Sodann werden im Block 103 die dieser anfänglichen Zuordnung entsprechenden Hilfswerte und der Wert der zu optimierenden Zielfunktion berechnet. Die Zielfunktion misst dabei, wie gut die momentan im Algorithmus angenommene Zuordnung der auf dem Trainingskorpus vorliegenden Verteilung der Nichtterminale entspricht. Eine solche mögliche Wahl für die Zielfunktion ist beispielsweise der quadratische Fehler

$$F = \sum_{s,c} (N_{true}(c,s) - N_{current}(c,s))^2 \, ,$$

wobei über alle Sätze $s$ des Trainingskorpus und alle Nichtterminale $c$ der Grammatik summiert wird, $N_{true}(c, s)$ die tatsächliche Anzahl des Auftretens des Nichtterminals $c$ im Satz $s$ bezeichnet, und $N_{current}(c,s)$ die der momentan im Algorithmus angenommenen Zuordnung entsprechende Anzahl des Auftretens des Nichtterminals $c$ im Satz $s$ bezeichnet. Am Anfang des Algorithmus ist also $N_{current}(c, s) = 0$ für alle Trainingssätze $s$ und alle Nichtterminale $c$, da ja alle Sequenzen im Block 102 keinem Nichtterminal zugeordnet wurden. Dagegen wäre beispielsweise $N_{true}(c =<$ Startort $>$, $s =$" Ich möchte von Berlin fahren. ") = 1, da in diesem Trainingssatz das Nichtterminal <Startort> genau einmal auftritt.

Diese Zielfunktion $F$ fasst also die Anzahlen der in einem Satz $s$ auftretenden Nichtterminale in den jeweiligen Vektoren $N_{true}(c,s)$ und $N_{current}(c,s)$ (mit Vektorindex $c$) zusammen und berechnet den Zuordnungsfehler als quadratischen Abstand dieser Vektoren, der über alle Sätze $s$ des Trainingskorpus summiert wird. Zu ihrer Berechnung werden also zunächst die Vektoren der Hilfswerte $N_{true}(c, s)$ und $N_{current}(c,s)$ gebildet, um dann die Zielfunktion $F$ selbst berechnen zu können.

Im Block 104 wird eine Sequenz-Variable $w_{current}$ auf die erste Sequenz einer Listung aller Sequenzen initialisiert. Dann wird im Block 105 die Sequenz $w_{current}$ von ihrer augenblicklichen Zuordnung zu einem oder keinem Nichtterminal $c_{current}$ gelöst und die damit verbundene Veränderung $\Delta F_{move-out}$ der Zielfunktion $F$ berechnet. Zum Zwecke einer einheitlichen Beschreibungsweise wird dabei an dieser Stelle die Zuordnung zu keinem Nichtterminal als Zuordnung zu einem künstlichen, leeren Nichtterminal_VOID_behandelt:

$$\tilde{c} = \_VOID\_ .$$

Insbesondere bleibt also für den Fall, dass im Block 105 die Sequenz $w_{current}$ bereits zu keinem Nichtterminal gehört: $\tilde{c}_{current} = \_VOID\_$, die Sequenz keinem Nichtterminal zugeordnet und es ist in diesem Fall: $\Delta F_{move-out} = 0$. In den anderen Fällen, in denen $w_{current}$ zu einem echten Nichtterminal $c_{current}$ gehört, lässt sich $\Delta F_{move-out}$ dadurch effizient berechnen, dass man bemerkt, dass sich Änderungen der Zielfunktion $F$ nur in den Sätzen $s$ ergeben, in denen die Sequenz $w_{current}$ auftritt, und dort auch nur in der Komponente $c = c_{current}$ des Vektors $N_{current}(c,s)$.

Im Block 106 wird die Nichtterminal-Variable $\tilde{c}$ auf_VOID_initialisiert:

$$\tilde{c} = \_VOID\_ ,$$

d. h. es wird mit der probeweisen Zuordnung zu keinem Nichtterminal begonnen (um dann bei der nächsten Ausführung dieser Schleife die Zuordnung zum ersten echten Nichtterminal auszutesten). Im Block 107 wird die Sequenz $w_{current}$ dann probeweise dem "Nichtterminal" $\tilde{c}$ zugeordnet und die damit verbundene Veränderung $\Delta F_{move-in}(\tilde{c})$ der Zielfunktion $F$ berechnet. Insbesondere gilt auch hier wieder: $\Delta F_{move-in}(\_VOID\_) = 0$. Auch lässt sich $\Delta F_{move-in}(\tilde{c})$ für die echten Nichtterminale $\tilde{c} = c$ in ähnlicher Weise effizient berechnen, wie dies oben für $\Delta F_{move-out}$ beschrieben wurde.

Im Entscheidungsblock 108 wird gefragt, ob noch weitere Nichtterminale für die Nichtterminal-Variable $\tilde{c}$ zur Verfügung stehen. Ist dies der Fall, so wird $\tilde{c}$ im Block 109 auf das in einer Listung der Nichtterminale nächste Nichtterminal gesetzt und die Kontrolle tritt wieder in Block 107 ein. Anderenfalls wird im Block 110 die beste Zuordnung $\tilde{c}_{min}$ für die Sequenz $w_{current}$ berechnet:

$$\tilde{c}_{min} = \arg\min_{\tilde{c}} (\Delta F(\tilde{c})) = \arg\min_{\tilde{c}} (\Delta F_{move-out} + \Delta F_{move-in}(\tilde{c})) \, ,$$

(Minimierung über alle "Nichtterminale" $\tilde{c}$, einschließlich_VOID_).
Die Summe $\Delta F_{move-out} + \Delta F_{move-in}(\tilde{c})$ der Veränderungen der Zielfunktion $F$ stellt deren Gesamtveränderung $\Delta F(\tilde{c})$ dar, welche ihren kleinsten Wert bei $\tilde{c}_{min}$ erreicht:

$$\Delta F(\tilde{c}_{min}) = \Delta F_{min} = \min_{\tilde{c}} (\Delta F(\tilde{c})) .$$

Daher ist, bei Beibehaltung der Zuordnungen für die übrigen Sequenzen, $\widetilde{c}_{min}$ die für die Zuordnung von $w_{current}$ beste Wahl.

Im Entscheidungsblock 111 wird geprüft, ob für die Sequenz $w_{current}$ mit $\widetilde{c}_{min}$ eine bessere als die ursprüngliche Zuordnung zu $\widetilde{c}_{current}$ gefunden wurde. Dazu wird geprüft, ob $\Delta F_{min} < 0$ gilt. Ist dies der Fall, so wurde eine bessere Zuordnung gefunden und dann wird im Block 112 $w_{current}$ zu $\widetilde{c}_{min}$ umgeordnet und es werden die entsprechenden Aktualisierungen der Hilfsvektoren $N_{current}(c,s)$ und der Zielfunktion $F$ vorgenommen. Anderenfalls konnte keine bessere Zuordnung gefunden werden und dann wird im Block 113 die alte Zuordnung von $w_{current}$ zu $\widetilde{c}_{current}$ und die alten Werte der Hilfsvektoren $N_{current}(c,s)$ und der Zielfunktion $F$ beibehalten.

Sowohl nach dem Block 112 als auch nach dem Block 113 geht die Kontrolle zum Entscheidungsblock 114, in dem gefragt wird, ob noch weitere Sequenzen in der Listung der Sequenzen abzuarbeiten sind. Ist dies der Fall, so wird im Block 115 der Sequenz-Variablen $w_{current}$ die nächste Sequenz der Listung der Sequenzen zugewiesen und die Kontrolle tritt wieder in Block 105 ein. Anderenfalls wird im Entscheidungsblock 116 gefragt, ob in der letzten Iteration, also vom Block 104 bis zum Block 116, irgendeine Zuordnung einer Sequenz $w$ verändert wurde. Ist dies der Fall, so tritt die Kontrolle zur Abarbeitung der nächsten Iteration wieder in Block 104 ein. Anderenfalls wird der Algorithmus im Endblock 117 beendet.

**Patentansprüche**

1. Verfahren zur Bestimmung von zu Nichtterminalen einer Grammatik gehörigen Sequenzen von Terminalen oder von Terminalen und Platzhaltern auf einem Trainingskorpus von Sätzen, von denen jeweils bekannt ist, welche Nichtterminale der Grammatik sie enthalten, mit den Schritten:

   - Bestimmung von Sequenzen von Terminalen oder von Terminalen und Platzhaltern und
   - jeweilige Zuordnung der Sequenzen von Terminalen oder von Terminalen und Platzhaltern zu einem oder keinem Nichtterminal mittels eines Klassifikationsverfahrens.

2. Verfahren nach Anspruch 1,
   **dadurch gekennzeichnet,**
   **dass** es sich bei den Sequenzen von Terminalen oder von Terminalen und Platzhaltern um reine Terminalsequenzen handelt.

3. Verfahren nach Anspruch 1,
   **dadurch gekennzeichnet,**
   **dass** bei der Bestimmung der Sequenzen von Terminalen oder von Terminalen und Platzhaltern die relative Häufigkeit des Auftretens der Sequenzen im Trainingskorpus berücksichtigt wird.

4. Verfahren nach Anspruch 1,
   **dadurch gekennzeichnet,**
   **dass** die Zuordnung der Sequenzen von Terminalen oder von Terminalen und Platzhaltern zu einem oder keinem Nichtterminal iterativ durch Minimierung der Funktion

$$F = \sum_{s,c} (N_{true}(c,s) - N_{current}(c,s))^2$$

   bestimmt wird, wobei über alle Sätze $s$ des Trainingskorpus und alle Nichtterminale $c$ der Grammatik summiert wird, $N_{true}(c,s)$ die tatsächliche Anzahl des Auftretens des Nichtterminals $c$ im Satz $s$ bezeichnet, und $N_{current}(c,s)$ die der in der vorigen Iterationsstufe bestimmten Zuordnung entsprechende Anzahl des Auftretens des Nichtterminals $c$ im Satz $s$ bezeichnet.

5. Verfahren nach Anspruch 1,
   **dadurch gekennzeichnet,**
   **dass** die Zuordnung der Sequenzen von Terminalen oder von Terminalen und Platzhaltern zu einem oder keinem Nichtterminal durch Klassifikation mittels des Austauschverfahrens erfolgt.

6. Verfahren nach Anspruch 5,
   **dadurch gekennzeichnet,**

**dass** das Austauschverfahrens die Sequenzen von Terminalen oder von Terminalen und Platzhaltern in der Reihenfolge ihrer Häufigkeit im Trainingskorpus auf Veränderung ihrer Zuordnung zu einem oder keinem Nichtterminal prüft.

7. Verfahren nach Anspruch 1,
**dadurch gekennzeichnet,**
**dass** nach Zuordnung der Sequenzen von Terminalen oder von Terminalen und Platzhaltern eine Sequenz, die aus zwei Teilsequenzen von Terminalen oder von Terminalen und Platzhaltern besteht, deren eine genauso wie die Sequenz selbst und deren andere verschieden von der Sequenz selbst zugeordnet ist, aus der Menge der bestimmten Sequenzen entfernt wird.

8. Verfahren nach Anspruch 7,
**dadurch gekennzeichnet,**
**dass** nach Entfernung der Sequenz, die aus zwei Teilsequenzen von Terminalen oder von Terminalen und Platzhaltern besteht, deren eine genauso wie die Sequenz selbst und deren andere verschieden von der Sequenz selbst zugeordnet ist, die jeweilige Zuordnung der Sequenzen von Terminalen oder von Terminalen und Platzhaltern zu einem oder keinem Nichtterminal wiederholt wird.

9. System zur Bestimmung von zu Nichtterminalen einer Grammatik gehörigen Sequenzen von Terminalen oder von Terminalen und Platzhaltern auf einem Trainingskorpus von Sätzen, von denen jeweils bekannt ist, welche Nichtterminale der Grammatik sie enthalten, das

- zur Bestimmung von Sequenzen von Terminalen oder von Terminalen und Platzhaltern und
- zur jeweiligen Zuordnung der Sequenzen von Terminalen oder von Terminalen und Platzhaltern zu einem oder keinem Nichtterminal mittels eines Klassifikationsverfahrens

vorgesehen ist.

10. Zu Nichtterminalen einer Grammatik gehörige Sequenzen von Terminalen oder von Terminalen und Platzhaltern, die mittels eines Verfahrens mit den Schritten:

- Bestimmung von Sequenzen von Terminalen oder von Terminalen und Platzhaltern und
- jeweilige Zuordnung der Sequenzen von Terminalen oder von Terminalen und Platzhaltern zu einem oder keinem Nichtterminal mittels eines Klassifikationsverfahrens

auf einem Trainingskorpus von Sätzen, von denen jeweils bekannt ist, welche Nichtterminale der Grammatik sie enthalten, bestimmt wurden.

FIG. 1

FIG. 2